# FASCICULE DE BREVET EUROPEEN

(11) **EP 0 646 717 B1**
(45) Date de publication et mention de la délivrance du brevet: **28.01.1998**
(21) Numéro de dépôt: 94402176.5
(22) Date de dépôt: 29.09.1994
(51) Int. Cl.: F02K 1/00, F02K 1/06, F02K 1/12

(54) **Dispositif de pilotage en lacet ou tangage d'un véhicule aérospatial équipé d'au moins une tuyère bidimensionnelle à détente-déflexion**
Vorrichtung zur Gier- oder Kippsteuerung eines Luft- und Raumfahrzeuges mit mindestens einer zweidimensionalen Expansions- Deflexions-Düse
Device for yaw and pitch control of an aerospace vehicle eqiupped with at least one two-dimensional expansion/deflection nozzle

(30) Priorité: 30.09.1993 FR 9311647
(43) Date de publication de la demande: 05.04.1995
(73) Titulaire: SOCIETE EUROPEENNE DE PROPULSION, 92150 Suresnes (FR)
(72) Inventeur: Saucereau, Didier, F-27120 Pacy-Sur-Eure (FR); Fournier, Didier, F-27630 Ecos (FR)
(74) Mandataire: Thévenet, Jean-Bruno

(56) Documents cités:
- EP-A- 0 392 526
- FR-A- 2 316 447
- GB-A- 2 055 333
- US-A- 3 080 711
- US-A- 4 732 324

## Description

### Domaine de l'invention

La présente invention concerne le domaine de la propulsion combinée et plus particulièrement celui des véhicules spatiaux utilisant des tuyères bidimensionnelles à détente-déflexion.

De façon plus spécifique, la présente invention a pour objet un dispositif de pilotage en lacet ou tangage d'un véhicule aérospatial équipé d'au moins une tuyère bidimensionnelle à détente-déflexion comprenant une première paroi profilée principale présentant une première partie sensiblement parallèle à l'axe longitudinal du véhicule et délimitant une chambre de combustion, une deuxième partie incurvée délimitant un col de tuyère, une troisième partie essentiellement rectiligne et inclinée d'un angle prédéterminé θ par rapport à l'axe du véhicule et une quatrième partie courbe dont la concavité est inversée par rapport à celle de la deuxième partie, une deuxième paroi profilée principale présentant une première partie sensiblement parallèle à l'axe du véhicule et délimitant ladite chambre de combustion, une deuxième partie incurvée délimitant ledit col de tuyère, une troisième partie essentiellement rectiligne et une arête d'extrémité définissant un foyer pour la tuyère, et des première et deuxième parois latérales sensiblement planes reliant les première et deuxième parois profilées principales.

### Art antérieur

On connaît déjà des tuyères propulsives du type à détente-déflexion.

Les tuyères à corps central peuvent avoir une configuration axisymétrique ou présenter un aspect bidimensionnel. Dans tous les cas, de telles tuyères présentent une géométrie fixe pour un mode donné de fonctionnement et ne participent pas au pilotage.

On connaît également des tuyères sans corps central présentant certains éléments de géométrie variable. Pour provoquer une déviation de jet, les tuyères traditionnelles impliquent en général la mise en oeuvre de plusieurs déflecteurs externes ou additionnels.

### Objet et description succincte de l'invention

La présente invention vise à améliorer le pilotage des véhicules spatiaux tout en élargissant le domaine d'application des tuyères bidimensionnelles à détente-déflexion.

Ces buts sont atteints grâce à un dispositif de pilotage en lacet ou tangage d'un véhicule aérospatial équipé d'au moins une tuyère bidimensionnelle à détente-déflexion comprenant une première paroi profilée principale présentant une première partie sensiblement parallèle à l'axe longitudinal du véhicule et délimitant une chambre de combustion, une deuxième partie incurvée délimitant un col de tuyère, une troisième partie essentiellement rectiligne et inclinée d'un angle prédéterminé θ par rapport à l'axe du véhicule et une quatrième partie courbe dont la concavité est inversée par rapport à celle de la deuxième partie une deuxième paroi profilée principale présentant une première partie sensiblement parallèle à l'axe du véhicule et délimitant ladite chambre de combustion, une deuxième partie incurvée délimitant ledit col de tuyère, une troisième partie essentiellement rectiligne et une arête d'extrémité définissant un foyer pour la tuyère, et des première et deuxième parois latérales sensiblement planes reliant les première et deuxième parois profilées principales, le dispositif comprenant des moyens pour modifier sélectivement en vol la position de l'arête d'extrémité constituant le foyer de la tuyère et créer une composante de poussée non axiale de module et de sens déterminés de façon à provoquer un mouvement de tangage ou lacet.

Lorsque la position du point foyer correspond à une position neutre pour laquelle la pression extérieure est égale à la pression de détente, la tuyère est adaptée et l'écoulement en sortie de la tuyère est dans l'axe du moteur.

En revanche, lorsque la position du point foyer a été modifiée volontairement par rapport à la position neutre, l'écoulement en sortie de la tuyère n'est plus dans l'axe du véhicule aérospatial et la poussée présente une composante non axiale qui permet un pilotage en roulis, tangage ou lacet selon la direction de cette composante non axiale, qui dépend elle-même du nombre et de la disposition des tuyères bidimensionnelles à foyer de position variable utilisées.

De façon plus particulière, selon l'invention, l'arête d'extrémité définissant le foyer de la tuyère est montée pivotante par rapport à un axe situé au voisinage de la deuxième partie incurvée de la deuxième paroi profilée principale.

Selon un mode particulier de réalisation, l'arête d'extrémité est divisée en deux arêtes parallèles pouvant pivoter chacune de façon indépendante et une cloison séparatrice est placée dans l'axe de la tuyère perpendiculairement aux deux arêtes parallèles qui sont elles-mêmes situées de part et d'autre de la cloison séparatrice qui divise la tuyère en deux zones d'écoulement.

La modification de la position des arêtes d'extrémité définissant le point foyer crée une différence de pression statique de part et d'autre de la cloison séparatrice centrale entraînant un changement d'orientation du jet de pression de l'un des écoulements et créant ainsi un jet résultant qui n'est plus dans l'axe du moteur.

Selon un premier mode de réalisation possible, l'arête d'extrémité définissant le foyer de la tuyère et l'axe de pivotement correspondant sont réunis par une plaque formant volet.

Selon un autre mode de réalisation possible, l'arête d'extrémité définissant le foyer de la tuyère et l'axe de pivotement correspondant appartiennent à une structure basculante en forme d'auge à profil en U.

Dans ce dernier cas, la cloison séparatrice peut être constituée par deux parois latérales adjacentes de deux structures basculantes en forme d'auge juxtaposées pour provoquer un pivotement indépendant de chacune des deux arêtes parallèles d'extrémité.

Par ailleurs, avec la mise en oeuvre d'une structure basculante, de façon avantageuse, les moyens pour modifier sélectivement en vol la position de l'arête d'extrémité constituant le foyer de la tuyère comprennent des actionneurs rattachés à la structure du véhicule en étant disposés à l'extérieur de la tuyère du côté de la première paroi principale profilée et les actionneurs agissent sur une barre transversale parallèle à l'arête d'extrémité et solidaire des parois latérales de la structure basculante en forme d'auge.

Selon un autre mode de réalisation possible, applicable notamment au cas où le foyer est déterminé par l'arête frontale d'une plaque formant volet pivotant, les moyens pour modifier sélectivement en vol la position de l'arête d'extrémité constituant le foyer de la tuyère comprennent des actionneurs disposés de part et d'autre des première et deuxième parois latérales de la tuyère et agissent sur une crémaillère située au voisinage de l'axe par rapport auquel l'arête d'extrémité est montée pivotante.

Selon une application possible de l'invention, le dispositif de pilotage comprend aux moins deux tuyères bidimensionnelles à détente-déflexion équipées de moyens pour modifier sélectivement en vol la position de l'arête d'extrémité constituant le foyer de la tuyère et disposées de façon symétrique par rapport à un plan contenant l'axe du moteur.

Dans ce cas, le dispositif peut comprendre au moins deux tuyères bidimensionnelles à détente-déflexion à foyer de position ajustable disposées symétriquement par rapport à un plan axial horizontal pour permettre un contrôle du moment de lacet du véhicule.

Le dispositif peut encore comprendre au moins deux tuyères bidimensionnelles à détente-déflexion à foyer de position ajustable disposées symétriquement par rapport à un plan axial vertical pour permettre un contrôle du moment de tangage du véhicule.

Selon une autre forme d'application possible de l'invention, le dispositif de pilotage comprend au moins deux paires de tuyères bidimensionnelles à détente-déflexion équipées de moyens pour modifier sélectivement en vol la position de l'arête d'extrémité constituant le foyer de la tuyère et disposées de façon symétrique par rapport à un plan vertical contenant l'axe du moteur, les tuyères de l'une des paires de tuyères étant décalées angulairement de 90° par rapport aux tuyères de l'autre paire de tuyères de manière à permettre un contrôle du véhicule en roulis, lacet et tangage.

### Brève description des dessins

D'autres caractéristiques et avantages de l'invention ressortiront de la description suivante de modes particuliers de réalisation donnés à titre d'exemples, en référence aux dessins annexés, sur lesquels:
- la figure 1 est une vue schématique en coupe, selon un plan médian vertical, d'une tuyère bidimensionnelle à détente-déflexion utilisable dans le cadre de la présente invention,
- la figure 2 est une vue schématique en coupe, selon un plan médian horizontal, d'un ensemble de deux tuyères bidimensionnelles à détente-déflexion agencées conformément à l'invention pour permettre un pilotage en lacet d'un véhicule spatial équipé de ce couple de tuyères,
- la figure 3 est une vue schématique de dessus d'une tuyère bidimensionnelle à cloison centrale munie de foyers pouvant présenter des positions différentes de part et d'autre de la cloison centrale,
- la figure 4 est une vue schématique de l'arrière d'un véhicule spatial équipé selon l'invention de quatre tuyères bidimensionnelles à foyer de position variable pour assurer un pilotage en lacet et tangage,
- la figure 5 est une vue schématique de l'arrière d'un véhicule spatial équipé selon l'invention de deux tuyères bidimensionnelles à foyer de position variable pour assurer un pilotage en roulis et tangage,
- la figure 6 est une vue schématique de l'arrière d'un véhicule spatial équipé selon l'invention de deux paires de tuyères bidimensionnelles à foyer de position variable pour assurer un pilotage en roulis, lacet et tangage,
- les figures 7 et 8 sont des vues de l'arrière et de côté d'un mode particulier de réalisation d'une tuyère bidimensionnelle à foyer de position variable défini par une double structure basculante en forme d'auge,
- les figures 9 à 12 sont des sections respectivement selon les lignes IX-IX, X-X, XI-XI et XII-XII de la figure 8,
- la figure 13 est une vue de détail de l'articulation d'une structure basculante utilisée dans le mode de réalisation des figures 7 à 12,
- la figure 14 est une vue de côté d'un autre mode particulier de réalisation d'une tuyère bidimensionnelle à foyer de position variable défini par un double volet pivotant,
- les figures 15 à 17 sont des sections respectivement selon les lignes XV-XV, XVI-XVI et XVII-XVII de la figure 14,
- la figure 18 est une vue de détail de l'articulation d'un volet pivotant utilisé dans le mode de réalisation des figures 15 à 17,
- les figures 19 et 20 sont des vues de l'arrière et de côté d'un ensemble de quatre tuyères bidimensionnelles à foyer de position variable selon un mode particulier de réalisation permettant un pilotage en lacet et en tangage d'un véhicule aérospatial, et
- les figures 21 à 24 sont des sections respectivement selon les lignes XXI-XXI, XXII-XXII, XXIII-XXIII et XXIV-XXIV de la figure 20.

### Description détaillée de modes particuliers de réalisation

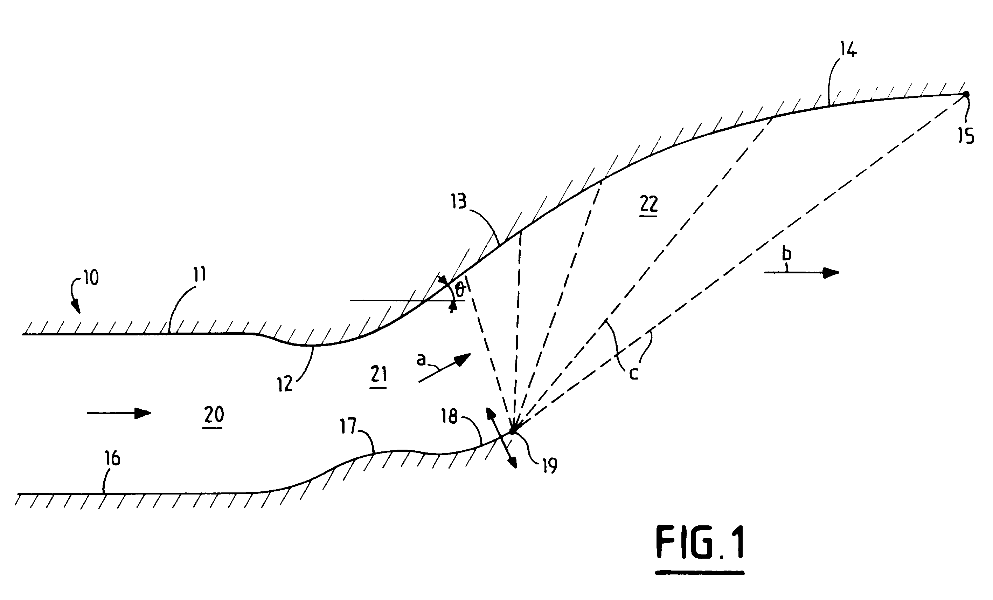

La figure 1 montre le principe d'une tuyère bidimensionnelle 10 à détente-déflexion pouvant être mise en oeuvre dans le cadre de la présente invention. La tuyère 10 présente une section essentiellement rectangulaire dans un plan perpendiculaire à son axe longitudinal.

La tuyère 10 comprend une première paroi principale profilée qui sur la figure 1 constitue un profil supérieur et présente une première partie 11 qui est sensiblement plane et parallèle à l'axe longitudinal du véhicule et délimite une chambre de combustion 20. La première paroi principale présente une deuxième partie incurvée 12 délimitant un col de tuyère 21, une troisième partie 13 essentiellement rectiligne qui est inclinée d'un angle prédéterminé θ par rapport à l'axe du véhicule et une quatrième partie courbe dont la concavité est tournée vers l'intérieur de la tuyère et est inversée par rapport à celle de la deuxième partie 12 délimitant le col 21.

Une deuxième paroi principale profilée, qui sur la figure 1 constitue un profil inférieur, présente une première partie 16 sensiblement plane et parallèle à l'axe du véhicule qui délimite la chambre de combustion 20, une deuxième partie incurvée 17 délimitant le col de tuyère 21, une troisième partie 18 essentiellement rectiligne et une arête d'extrémité 19 qui constitue le foyer de la tuyère. Des plaques latérales, non visibles sur la figure 1, relient entre elles les première et deuxième parois principales profilées pour constituer un canal d'écoulement des gaz brûlés dans la chambre de combustion 20.

A l'arrière du col 21 délimité par les parties incurvées 12 et 17, l'écoulement des gaz est d'abord orienté selon le sens de la flèche a essentiellement parallèlement à la partie rectiligne 13 du profil supérieur, puis à l'arrière du foyer 19 les gaz présentent un faisceau de détente 22 pour produire vers l'extrémité 15 du profil supérieur un écoulement de gaz détendus orienté essentiellement selon la flèche b, c'est-à-dire pratiquement parallèlement à l'axe du moteur.

Dans une tuyère à détente-déflexion, l'écoulement d'un flux supersonique autour d'un dièdre dont le sommet est constitué par le foyer 19 est caractérisé par deux zones d'écoulement uniforme selon les flèches a et b respectivement à l'avant et à l'arrière d'une zone de détente constituée par un ensemble de lignes caractéristiques c de l'écoulement se focalisant sur le sommet du dièdre (foyer 19). Dans le cas d'une tuyère, dans la mesure où l'on désire obtenir en sortie un écoulement b essentiellement parallèle à l'axe du véhicule, l'écoulement a devant subir la détente dans la zone des lignes c rentre entre les tronçons de paroi 13 et 18 inclinés qui prolongent le col avec un angle θ tel que lorsque la tuyère est adaptée, c'est-à-dire lorsque l'air ambiant est à la pression d'adaptation Pad, l'écoulement en sortie de la tuyère est dans l'axe du moteur et la poussée est également dans l'axe du véhicule.

Lorsque la pression extérieure n'est pas égale à la pression de détente pour laquelle la tuyère a été dimensionnée par construction (choix du profil supérieur 11 à 14 du foyer 19), l'écoulement en sortie de la tuyère n'est plus dans l'axe du véhicule. Il y a alors apparition d'une composante non axiale de la poussée, verticale ou horizontale, qui génère selon l'orientation un moment de tangage ou de lacet.

Selon l'invention, on modifie volontairement en cours de vol la position du foyer 19 par rapport à une position d'adaptation de la tuyère, de façon à régler en module, direction et sens une composante non axiale de la poussée, du fait de la modulation de la prédétente des gaz de combustion effectuée entre le col de la tuyère 21 et la section droite de passage des gaz passant par le foyer 19. On influe ainsi sur l'évolution de la pression statique dans le faisceau de détente.

On décrira ci-après différents modes de réalisation possibles pour assurer un pilotage en lacet ou tangage par modification de la position du point foyer d'une tuyère à détente-déflexion.

Afin de pouvoir facilement moduler, pour une direction donnée, à la fois le module et le sens d'une composante de force propulsive non axiale, afin de contrôler un moment de lacet ou de tangage, une solution conforme à l'invention consiste à associer deux tuyères bidimensionnelles à détente-déflexion de façon symétrique par rapport à l'axe du moteur.

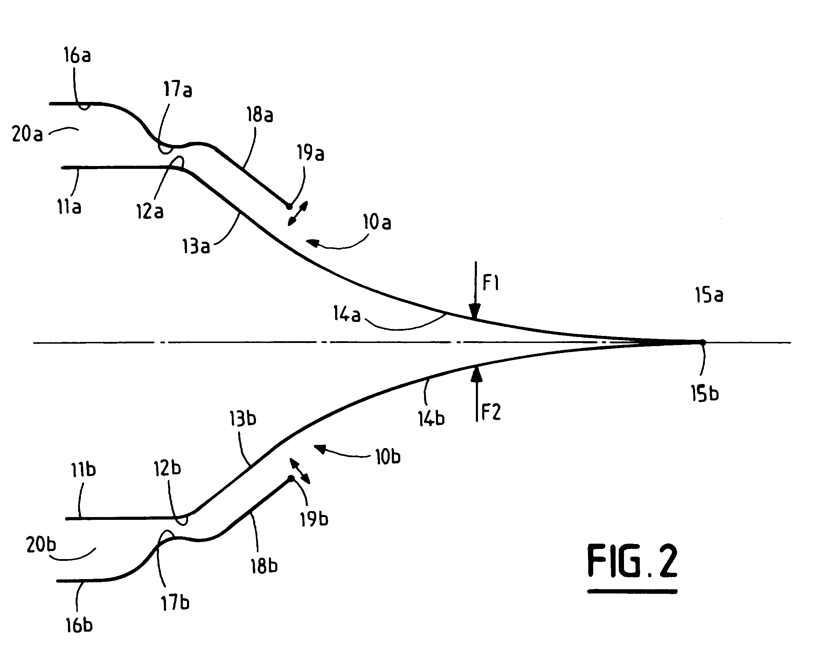

A titre d'exemple, on a représenté schématiquement sur la figure 2, en coupe selon un plan horizontal, deux tuyères 10a, 10b à détente-déflexion qui présentent chacune des éléments constitutifs 11a à 19a respectivement 11b à 19b identiques aux éléments 11 à 19 de la figure 1 et sont symétriques par rapport à un plan axial vertical. Sur la figure 2, les foyers 19a, 19b des tuyères 10a, 10b peuvent être déplacés dans le sens horizontal de manière à modifier le module des composantes de force F₁ et F₂ créées respectivement par les tuyères 10a et 10b dans le plan horizontal perpendiculairement à l'axe du moteur. On peut ainsi créer et contrôler à volonté et en permanence le moment de lacet souhaité. Ainsi, lorsque la force F₁ créée par la tuyère 10a et dirigée vers la gauche du véhicule est supérieure en module à la force F₂ créée par la tuyère 10b et dirigée vers la droite du véhicule, on obtient un moment de lacet dirigé vers la gauche. Inversement, lorsque la force F₂ est supérieure à la force F₁, le moment de lacet est dirigé vers la droite. En cas d'égalité des forces F₁ et F₂, le couple de lacet est nul et le bilan de poussée sur le véhicule est purement axial.

Si les tuyères de la figure 2 sont disposées l'une au-dessus de l'autre, et non côte à côte, tout en restant symétriques par rapport à l'axe du moteur, c'est-à-dire si la figure 2 est considérée comme étant une coupe dans un plan vertical, plutôt que dans un plan horizontal, la force F₁ de la tuyère 10a est verticale et dirigée vers le bas tandis que la force F₂ de la tuyère 10b est verticale et dirigée vers le haut. La position des foyers 19a, 19b permet dans ce cas de contrôler le module et le sens de la composante de poussée résultante F₁ + F₂ dans le sens vertical, et donc le mouvement de tangage, et ceci quelles que soient la vitesse et l'altitude de vol ainsi que les conditions thermodynamiques du gaz dans les chambres de combustion 20a, 20b.

Naturellement l'association d'un couple de tuyères identiques symétriques 10a, 10b à action horizontale et d'un couple de tuyères identiques symétriques 10a, 10b à action verticale permet de contrôler en permanence le pilotage en lacet et tangage du véhicule équipé de ces deux couples de tuyères.

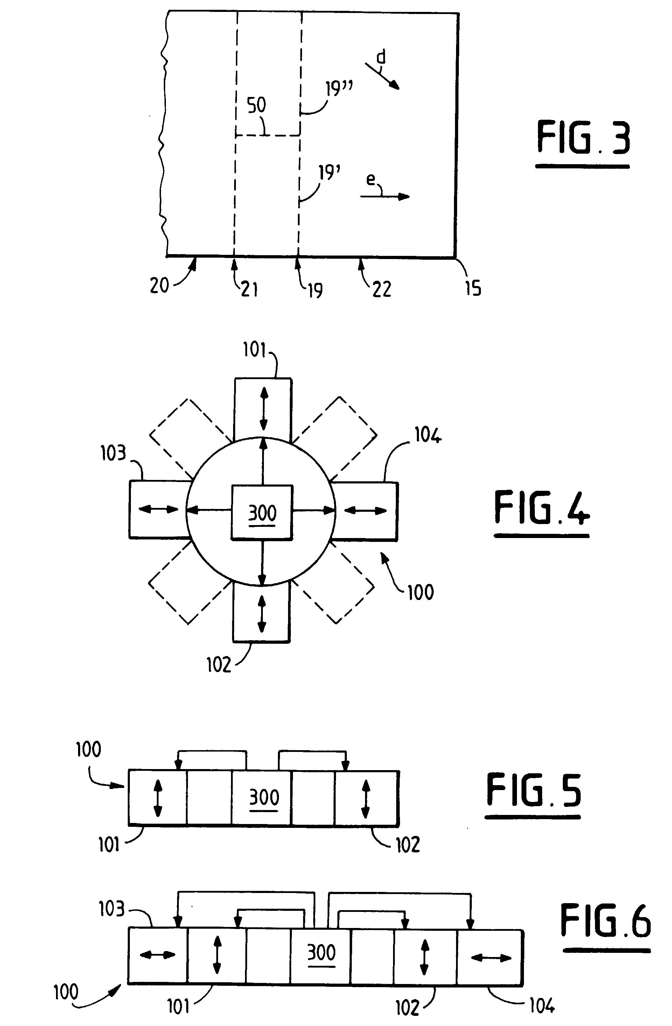

La figure 3 montre de façon schématique une tuyère bidimensionnelle à détente-déflexion dans laquelle l'arête d'extrémité 19 est divisée en deux arêtes parallèles 19', 19'' dont les positions peuvent être modifiées indépendamment l'une de l'autre. Une cloison séparatrice 50 est placée dans l'axe de la tuyère, perpendiculairement aux arêtes parallèles 19', 19'' qui sont elles-mêmes situées de part et d'autre de la cloison séparatrice 50 qui divise la tuyère en deux zones d'écoulement en aval du col 21. La cloison 50 est interrompue au niveau des arêtes 19', 19". Les débits des écoulements 1 et 2 en aval des arêtes parallèles 19', 19'' constituant le foyer de la tuyère sont identiques, mais il existe une différence de pression statique de part et d'autre de la cloison centrale 50 due à des positions différentes des arêtes 19', 19'' définissant le foyer de la tuyère. Il s'ensuit une déviation du jet de pression plus élevée (flèche d) vers le jet de pression plus faible (flèche e). La direction du jet résultant n'étant plus dans l'axe du moteur, il existe un moment de lacet. On notera que si la tuyère de la figure 3 subit une rotation de 90°, c'est-à-dire est disposée avec des arêtes d'extrémité 19', 19'' verticales et une cloison 50 horizontale, il est créé, par action sélective sur la position des arêtes d'extrémité 19', 19", une composante de force non axiale dans une direction verticale qui permet la production d'un moment de tangage.

Les figures 4 à 6 montrent de façon schématique des exemples de mise en oeuvre de tuyères à détente-déflexion dont le foyer présente une position ajustable en permanence. La figure 4 montre un dispositif de pilotage 100 avec la disposition en croix de deux paires de tuyères selon l'invention 101, 102 et 103, 104 pouvant créer des composantes de poussée non axiales selon deux directions perpendiculaires entre celles par exemple respectivement dans une direction verticale et dans une direction horizontale, ce qui permet d'assurer une commande en tangage et lacet du véhicule.

La figure 5 montre un dispositif de pilotage 100 avec une paire de tuyères selon l'invention 101, 102 pouvant créer une composante de poussée non axiale verticale, les tuyères 101, 102 étant disposées latéralement de part et d'autre du véhicule, ce qui permet d'assurer une commande en roulis et tangage.

La figure 6 montre un dispositif de pilotage 100 analogue à celui de la figure 5 avec une première paire de tuyères 101, 102 pouvant créer une composante de poussée non axiale verticale, à laquelle s'ajoute une deuxième paire de tuyères 103, 104 pouvant créer une composante de poussée non axiale horizontale, les tuyères 103 et 104 étant disposées latéralement de part et d'autre du véhicule, symétriquement par rapport à l'axe du véhicule, comme les tuyères 101, 102, de manière à permettre une commande en roulis, tangage et lacet.

Sur les figures 3 et 4, on a représenté de façon symbolique un dispositif de commande centralisée 300 placé dans le véhicule spatial, qui permet de commander des actionneurs agissant sur la position des arêtes d'extrémité formant foyer des différentes tuyères 101, 102, 103, 104, pour assurer le pilotage en lacet, tangage ou roulis.

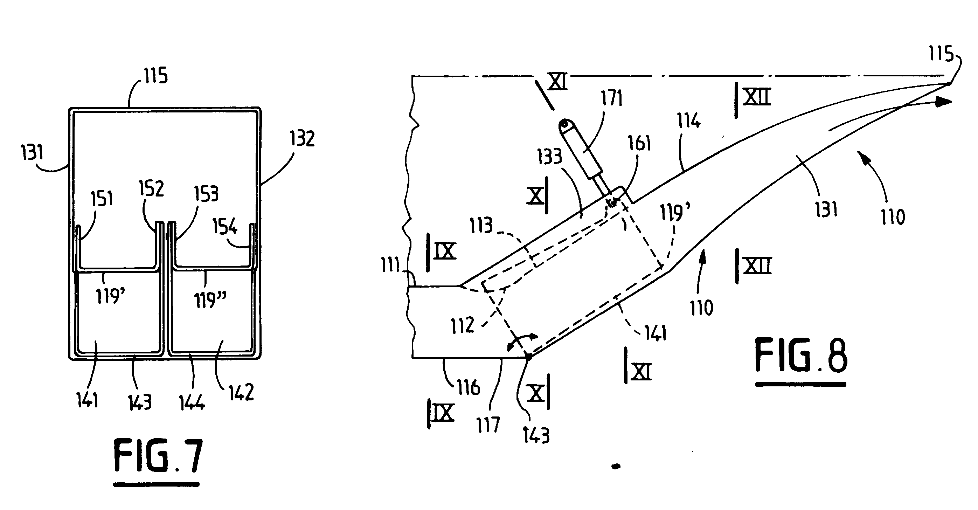

On décrira maintenant en référence aux figures 7 à 13 un premier mode particulier de réalisation d'une tuyère à détente-déflexion dont le foyer présente une position pouvant être en permanence ajustée pour permettre le contrôle d'efforts non axiaux.

Sur la figure 8, la tuyère 110 est représentée dans la même position que la tuyère 10 de la figure 1, c'est-à-dire avec un profil supérieur composé de parties 111, 112, 113,114, 115 analogues aux parties 11, 12, 13, 14, 15 de la tuyère 10. Le profil inférieur de la tuyère 110 comprend des parties 116 et 117 qui, comme les parties 16 et 17 de la tuyère 10, délimitent respectivement l'espace 120 constituant la chambre de combustion et le col de la tuyère. Les figures 7, 8, 10, 11 montrent la mise en oeuvre d'une double structure basculante en forme d'auge qui définit la partie rectiligne 141, 142 du profil inférieur de la tuyère en aval du col et les arêtes d'extrémité 119', 119" constituant le foyer de la tuyère, dont la position est ajustable. Des parois latérales 131, 132 sont rattachées aux parties 111 à 115 du profil supérieur ainsi qu'aux parties 116, 117 du profil inférieur pour définir une section de tuyère essentiellement rectangulaire.

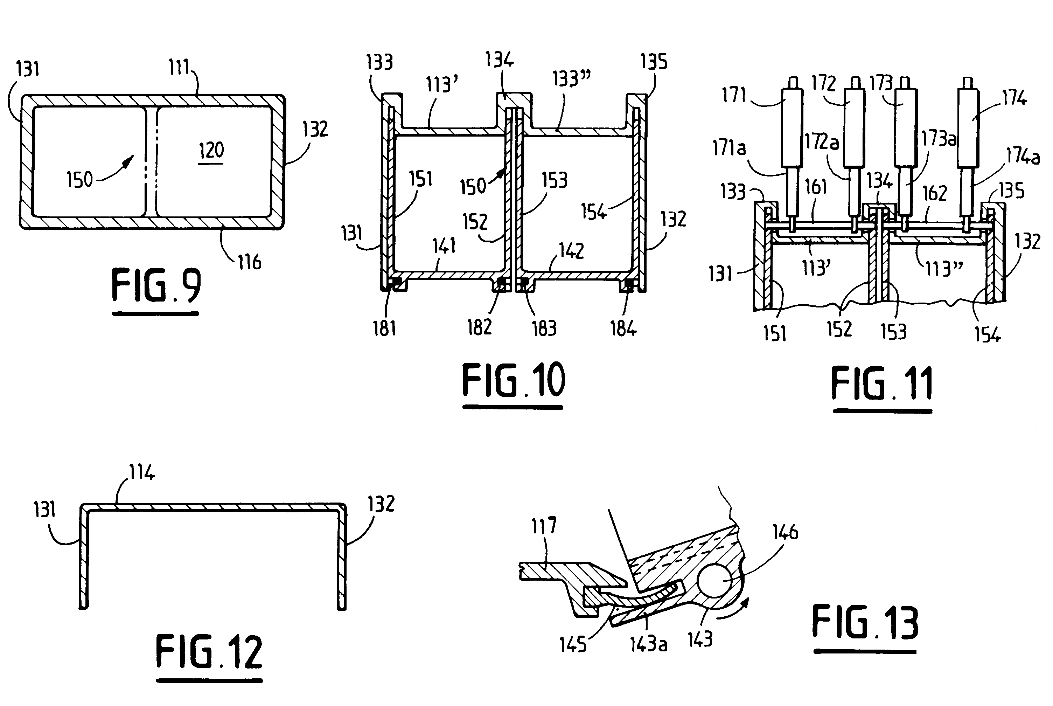

Le foyer de la tuyère 110 est constitué par deux arêtes d'extrémité 119', 119" de deux structures en forme d'auge à profil en U montées côte à côte de façon à pouvoir pivoter autour d'un axe 146 (figure 13) au niveau d'une articulation 143 située près de la partie 117 délimitant le col de la tuyère. Chaque structure en auge comprend un fond 141 ; 142 dont l'arête d'extrémité arrière 119'; 119" définit le foyer de la tuyère, et des parois latérales 151, 152 ; 153, 154 dont la partie arrière est prolongée vers le haut à l'extérieur de la partie 113', 113" de la paroi profilée supérieure délimitant la tuyère en aval du col de tuyère. Des axes transversaux 161, 162 parallèles aux arêtes 119', 119'' sont montés sur les prolongements des parois latérales 151, 152 ; 153, 154 et traversent des lumières formées dans les parties 133, 134, 135 de liaison des éléments de paroi profilée supérieure 113', 113" entre eux et avec les parois latérales 131, 132 de la tuyère. Des actionneurs tels que des vérins 171, 172, 173, 174 comprennent un corps rattaché à la structure du véhicule à l'extérieur de la tuyère et une tige 171a, 172a, 173a, 174a dont l'extrémité agit sur les axes transversaux 161, 162 solidaires des parois latérales 151, 152 ; 153, 154. Par action sur les vérins 171 et 172, il est possible de modifier la position de l'arête 119' de la première structure basculante. De même une action sur les vérins 173 et 174 permet de modifier la position de l'arête 119" de la deuxième structure basculante. On peut ainsi, comme déjà expliqué en référence à la figure 3, créer une différence de pression statique de part et d'autre d'une cloison centrale longitudinale 150 constituée par les parois latérales adjacentes 152 et 153 des deux structures en auge basculantes, par une modification des positions relatives des arêtes 119', 119" par rapport à une position neutre pour laquelle la direction du jet résultant reste dans l'axe du moteur.

Naturellement, des joints d'étanchéité sont placés entre les structures basculantes en forme d'auge et les parois fixes définissant la tuyère bidimensionnelle. Des joints 181, 182, 183, 184 sont ainsi disposés entre les fonds 141, 142 des structures basculantes en auge ainsi qu'entre ces fonds 141, 142 et les parois latérales 131, 132. Sur la figure 13, on voit un joint 145 en forme de languette incurvée disposé entre la partie de paroi fixe 17 formant le col de tuyère et une rainure définie par un prolongement 143a de l'articulation 143 des structures basculantes pivotant autour de l'axe transversal 146.

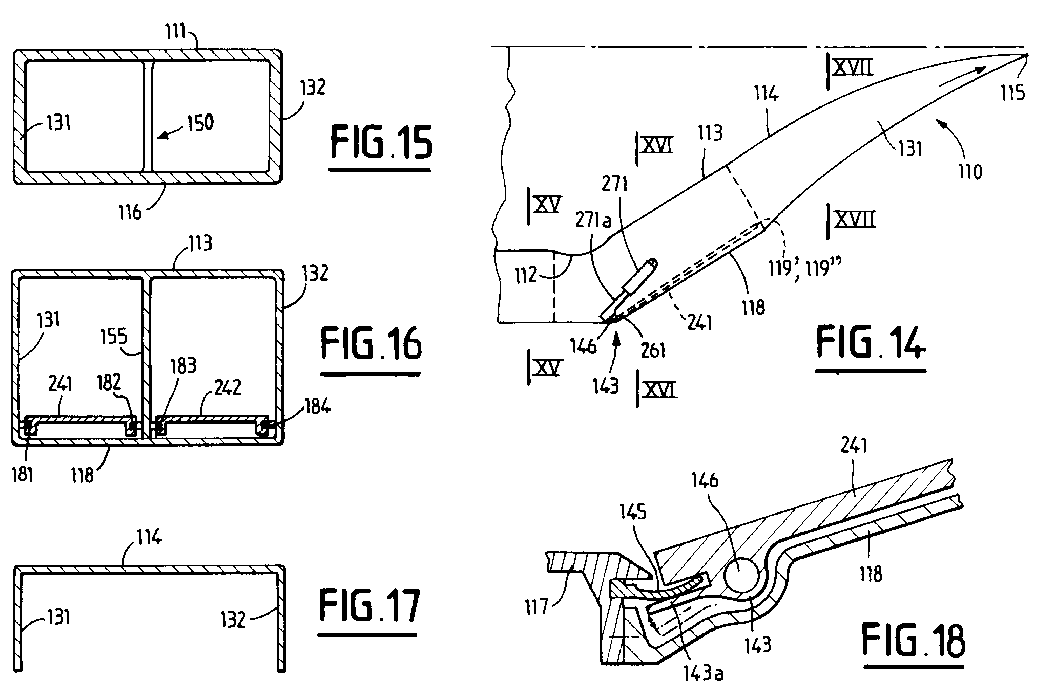

Les figures 14 à 18 montrent un autre mode de réalisation possible pour une tuyère à détente-déflexion divisée longitudinalement par une cloison 150 et présentant des arêtes d'extrémité 119', 119" transversales parallèles pouvant se déplacer de façon indépendante de part et d'autre de la cloison séparatrice 150 parallèlement à celle-ci, de manière à diviser la tuyère en deux zones d'écoulement.

Dans le cas de la réalisation des figures 14 à 18, l'arête d'extrémité 119', 119" définissant le foyer de la tuyère et l'axe de pivotement 146 correspondant sont réunis par une simple plaque 241, 242 formant volet. La cloison médiane longitudinale verticale 150 est alors constituée par une paroi fixe 155 parallèle aux parois latérales 131, 132 de la tuyère et rattachée à la paroi supérieure 113.

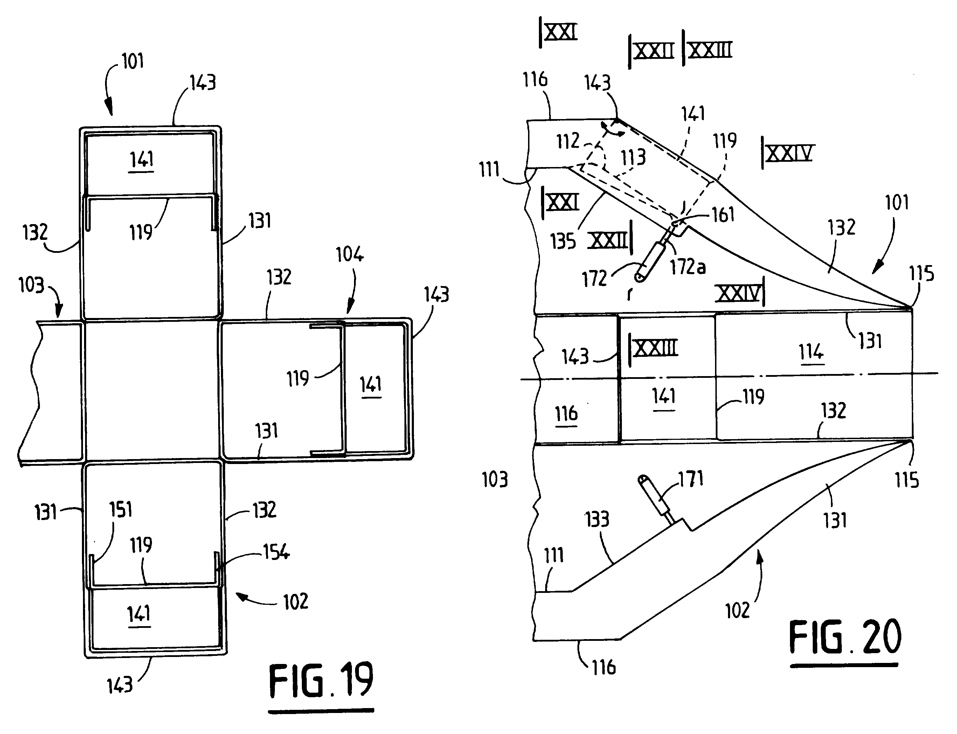

L'étanchéité est assurée entre les plaques 241, 242 et les parois latérales 131, 132 ainsi que la cloison centrale 150 par des joints d'étanchéité 181, 182, 183, 184. Un joint 145 en forme de languette incurvée peut être disposé entre la partie de paroi fixe 117 formant col de tuyère et une rainure définie par un prolongement 143a de l'articulation 143 des plaques basculantes 241, 242, comme dans le cas de la figure 13. Sur la vue de détail de la figure 18, on a cependant représenté une plaque profilée 118 fixe servant de protection qui peut être placée sous les plaques basculantes 241, 242 (figures 14 et 16) notamment pour rigidifier la structure de la tuyère et assurer une fixation des parois latérales 131, 132 et de la cloison fixe 155. Le foyer est toutefois constitué par les arêtes 119', 119" de position ajustable situées aux extrémités des plaques pivotantes 241, 242, et non par les arêtes d'extrémité de la plaque inférieure 118 qui, dans ce mode de réalisation, ne joue aucun rôle vis-à-vis du flux de gaz.

On voit sur la figure 14 que dans le cas d'un mode de réalisation à plaques pivotantes 241, 242, les moyens pour modifier sélectivement en vol la position des arêtes d'extrémité 119', 119" constituant le foyer de la tuyère comprennent des actionneurs, tels que des vérins 271, disposés de part et d'autre des parois latérales 131, 132 de la tuyère à l'extérieur de celle-ci et agissant sur des crémaillères 261 situées au voisinage de l'axe 146 par rapport auquel les arêtes d'extrémité 119', 119" peuvent pivoter.

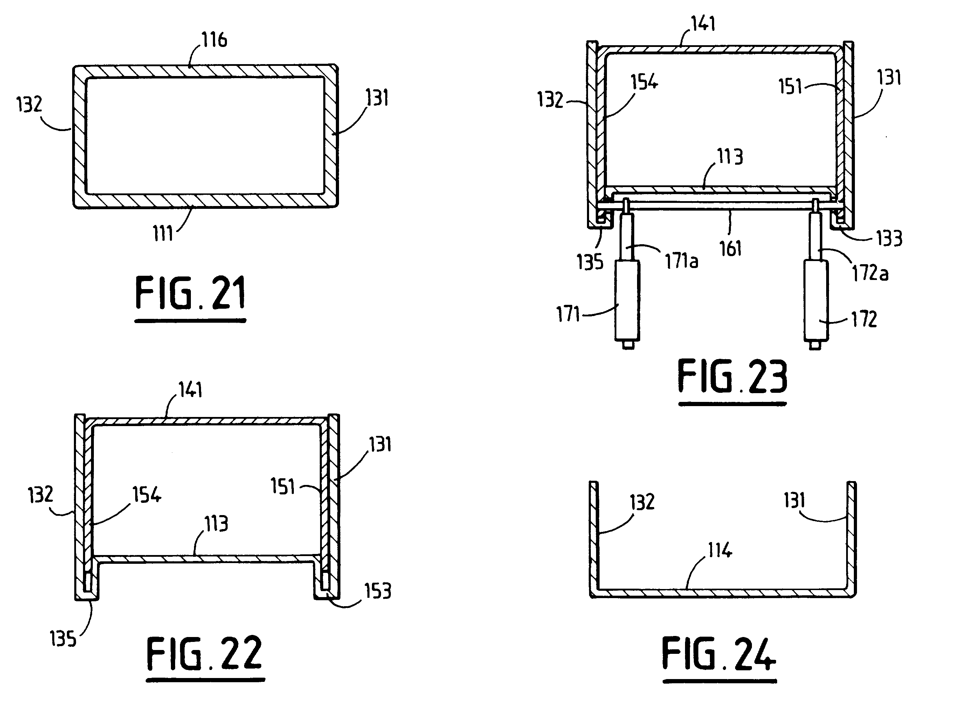

Les figures 19 à 24 montrent un mode particulier de réalisation appliqué à un ensemble de quatre tuyères bidimensionnelles 101-104 à foyer de position variable permettant d'assurer un pilotage d'un véhicule aérospatial en lacet et en tangage.

Les tuyères 101 à 104 des figures 19 et 20 sont agencées de la manière décrite schématiquement en référence à la figure 4. Les tuyères 101 et 102 assurent un pilotage en tangage tandis que les tuyères 103 et 104 contribuent à assurer le pilotage du véhicule en lacet.

Chacune des tuyères 101 à 104 des figures 19 et 20 est réalisée d'une façon assez semblable à celle des figures 7 à 13, avec une structure basculante en forme d'auge à profil en U. Toutefois, chaque tuyère ne comporte qu'une seule structure basculante pivotant autour d'une articulation 143 et définissant une plaque de fond 141 avec une arête d'extrémité 119 et des parois latérales 151, 154, qui se prolongent au-delà de la paroi 113 pour supporter un axe transversal 161 parallèle à l'arête extrémité 119.

Les extrémités latérales de l'axe 161 solidaire des parois latérales 151, 154 peuvent se déplacer dans des lumières formées des retours 133, 135 des parois latérales fixes 131, 132.

Des actionneurs extérieurs à la tuyère et commandés par un dispositif 300 de commande centralisée 300 (figure 4), qui peuvent être constitués par des vérins 171, 172, agissent par des tiges de vérin 171a, 172a sur l'axe 161 de la même manière que les vérins 171, 172 de la figure 11.

Naturellement, les différents modes de réalisation décrits peuvent être combinés entre eux. Ainsi, les tuyères 101 à 104 de figures 19 et 20 pourraient être constituées à partir de structures basculantes doubles avec cloisons séparatrices comme selon les figures 7 à 11 ou à partir d'éléments à volets basculants comme décrit en référence aux figures 14 à 18 avec ou sans cloisons séparatrices.

## Revendications

1. Dispositif de pilotage en lacet ou tangage d'un véhicule aérospatial équipé d'au moins une tuyère bidimensionnelle à détente-déflexion (10 ; 10a, 10b ; 101, 102, 103, 104) comprenant une première paroi profilée principale présentant une première partie (11 ; 111) sensiblement parallèle à l'axe longitudinal du véhicule et délimitant une chambre de combustion (20), une deuxième partie incurvée (12; 112) délimitant un col de tuyère (21), une troisième partie (13 ; 113) essentiellement rectiligne et inclinée d'un angle prédéterminé θ par rapport à l'axe du véhicule et une quatrième partie courbe (14 ; 114) dont la concavité est inversée par rapport à celle de la deuxième partie (12 ; 112), une deuxième paroi profilée principale présentant une première partie (16 ; 116) sensiblement parallèle à l'axe du véhicule et délimitant ladite chambre de combustion (20), une deuxième partie incurvée (17; 117) délimitant ledit col de tuyère (21), une troisième partie (18 ; 141, 142 ; 241, 242) essentiellement rectiligne et une arête d'extrémité (19 ; 119 ; 119', 119") définissant un foyer pour la tuyère, et des première et deuxième parois latérales (131, 132) sensiblement planes reliant les première et deuxième parois profilées principales, le dispositif comprenant des moyens (171 à 174 ; 271) pour modifier sélectivement en vol la position de l'arête d'extrémité constituant le foyer (19 ; 119 ; 119', 119") de la tuyère et créer une composante de poussée non axiale de module et de sens déterminés de façon à provoquer un mouvement de tangage ou lacet.

2. Dispositif selon la revendication 1, caractérisé en ce que l'arête d'extrémité (19 ; 119 ; 119', 119") définissant le foyer de la tuyère est montée pivotante par rapport à un axe (146) situé au voisinage de la deuxième partie incurvée (17; 117) de la deuxième paroi profilée principale.

3. Dispositif selon la revendication 1 ou 2, caractérisé en ce que l'arête d'extrémité (119) est divisée en deux arêtes parallèles (119', 119") pouvant pivoter chacune de façon indépendante et en ce qu'une cloison séparatrice (150) est placée dans l'axe de la tuyère perpendiculairement aux deux arêtes parallèles (119', 119") qui sont elles-mêmes situées de part et d'autre de la cloison séparatrice (150) qui divise la tuyère en deux zones d'écoulement.

4. Dispositif selon la revendication 2 ou 3, caractérisé en ce que l'arête d'extrémité (19; 119; 119', 119'') définissant le foyer de la tuyère et l'axe de pivotement (146) correspondant sont réunis par une plaque (241, 242) formant volet.

5. Dispositif selon la revendication 2 ou 3, caractérisé en ce que l'arête d'extrémité (19; 119; 119', 119") définissant le foyer de la tuyère et l'axe de pivotement (146) correspondant appartiennent à une structure basculante en forme d'auge à profil en U (141, 143, 151, 152; 142, 144, 153, 154; 141, 143, 151, 154).

6. Dispositif selon les revendications 3 et 5, caractérisé en ce que la cloison séparatrice (150) est constituée par deux parois latérales adjacentes (152, 153) de deux structures basculantes en forme d'auge juxtaposées pour provoquer un pivotement indépendant de chacune des deux arêtes parallèles d'extrémité (119', 119").

7. Dispositif selon l'une quelconque des revendications 1 à 4, caractérisé en ce que les moyens pour modifier sélectivement en vol la position de l'arête d'extrémité constituant le foyer (19; 119; 119', 119") de la tuyère comprennent des actionneurs (271) disposés de part et d'autre des première et deuxième parois latérales (131, 132) de la tuyère et agissant sur une crémaillère (261) située au voisinage de l'axe (146) par rapport auquel l'arête d'extrémité (19 ; 119 ; 119', 119") est montée pivotante.

8. Dispositif selon l'une quelconque des revendications 5 et 6, caractérisé en ce que les moyens pour modifier sélectivement en vol la position de l'arête d'extrémité constituant le foyer (19; 119; 119', 119") de la tuyère comprennent des actionneurs (171, 172, 173, 174) rattachés à la structure du véhicule en étant disposés à l'extérieur de la tuyère du côté de la première paroi principale profilée et, en ce que les actionneurs (171, 172, 173, 174) agissent sur une barre transversale parallèle à l'arête d'extrémité (19 ; 119 ; 119', 119") et solidaire des parois latérales (151, 152; 153, 154; 151, 154) de la structure basculante en forme d'auge.

9. Dispositif selon l'une quelconque des revendications 1 à 8, caractérisé en ce qu'il comprend aux moins deux tuyères bidimensionnelles (101, 102 ; 103, 104) à détente-déflexion équipées de moyens (171 à 174 ; 271) pour modifier sélectivement en vol la position de l'arête d'extrémité constituant le foyer (19 ; 119) de la tuyère et disposées de façon symétrique par rapport à un plan contenant l'axe du moteur.

10. Dispositif selon la revendication 9, caractérisé en ce qu'il comprend au moins deux tuyères bidimensionnelles (101, 102) à détente-déflexion à foyer de position ajustable disposées symétriquement par rapport à un plan axial horizontal pour permettre un contrôle du moment de lacet du véhicule.

11. Dispositif selon la revendication 9 ou 10, caractérisé en ce qu'il comprend au moins deux tuyères bidimensionnelles (103, 104) à détente-déflexion à foyer de position ajustable disposées symétriquement par rapport à un plan axial vertical pour permettre un contrôle du moment de tangage du véhicule.

12. Dispositif selon l'une quelconque des revendications 1 à 8, caractérisé en ce qu'il comprend au moins deux paires de tuyères bidimensionnelles (101, 102 ; 103, 104) à détente-déflexion équipées de moyens (171 à 174 ; 271) pour modifier sélectivement en vol la position de l'arête d'extrémité constituant le foyer (19 ; 119) de la tuyère et disposées de façon symétrique par rapport à un plan vertical contenant l'axe du moteur, les tuyères (103, 104) de l'une des paires de tuyères étant décalées angulairement de 90° par rapport aux tuyères (101, 102) de l'autre paire de tuyères de manière à permettre un contrôle du véhicule en roulis, lacet et tangage.

## Patentansprüche

1. Vorrichtung zur Gier- oder Kippsteuerung eines Luft- und Raumfahrzeuges, welches mit mindestens einer zweidimensionalen Expansions-Deflexions-Düse (10; 10a, 10b; 101, 102, 103, 104) ausgestattet ist, mit einer ersten profilierten Hauptwand, die ein erstes Teil (11; 111) darstellt, das im wesentlichen parallel zur Längsachse des Fahrzeugs ist und eine Verbrennungskammer (20) begrenzt, ein gebogenes zweites Teil (12; 112), das den Düsenhals begrenzt (21), ein drittes Teil (13; 113) im wesentlichen geradlinig und um einen vorherbestimmten Winkel θ, bezogen auf die Fahrzeugachse, verkippt ist, und ein gebogenes viertes Teil (14, 114), dessen Krümmung verglichen mit dem des zweiten Teils (12; 112) in entgegengesetzte Richtung zeigt, einer zweiten profilierten Hauptwand, die ein erstes Teil (16; 116) darstellt, das deutlich parallel zur Fahrzeugachse ist und die besagte Verbrennungskammer (20) begrenzt, ein gebogenes zweites Teil (17; 117), das den besagten Düsenhals (21) begrenzt, ein drittes Teil (18; 141, 142; 241, 242) im wesentlichen geradlinig und eine Endkante (19; 119; 119', 119"), die den Fokus der Düse beschreibt, und eine erste und zweite Seitenwand (131, 132), im wesentlichen eben, die die erste und die zweite profilierte Hauptwand verbindet, wobei die Vorrichtung Mittel (171 bis 174; 271) umfaßt, zum wahlweisen Verändern während des Fluges der Lage der Endkante, die den Fokus (19; 119; 119', 119") der Düse darstellt, und zum Erzeugen einer nichtaxialen Komponente des Schubmoduls und der vorherbestimmten Schubrichtung derart, daß eine Kipp- oder Gierbewegung hervorgerufen wird.

2. Vorrichtung nach Anspruch 1, dadurch gekennzeichnet, daß die Endkante (19; 119; 119', 119"), die den Fokus der Düse beschreibt, drehbar gelagert ist, bezogen auf die Achse (146), die in der Nähe des gebogenen zweiten Teils (17; 117) der zweiten profilierten Hauptwand angeordnet ist.

3. Vorrichtung nach Anspruch 1 oder 2, dadurch gekennzeichnet, daß die Endkante (119) in zwei parallele Kanten (119', 119") geteilt ist, die unabhängig voneinander drehen können und durch eine Trennwand (150), die in der Düsenachse angebracht ist, welche senkrecht zu den zwei parallelen Kanten (119', 119") steht, die selber auf beiden Seiten der Trennwand (150) angebracht sind, die die Düse in zwei Abströmungsbereiche einteilt.

4. Vorrichtung nach Anspruch 2 oder 3, dadurch gekennzeichnet, daß die Endkante (19; 119; 119', 119"), die den Brennpunkt der Düse beschreibt, und die entsprechende Drehachse durch eine Platte (241, 242), die eine Klappe bildet, verbunden sind.

5. Vorrichtung nach Anspruch 2 oder 3, dadurch gekennzeichnet, daß die Endkante (19; 119; 119', 119"), die den Brennpunkt der Düse beschreibt, und die entsprechende Drehachse (146) zu einem ausklappbaren, rinnenförmigen Aufbau mit U-Profil (141, 143, 151, 152; 142, 144, 153, 154; 141, 143, 151, 154) dazugehören.

6. Vorrichtung nach Anspruch 3 und 5, dadurch gekennzeichnet, daß die Trennwand (150) aus zwei angrenzenden Seitenwänden (152, 153) mit zwei nebeneinandergestellten, ausklappbaren, rinnenförmigen Aufbauten gebildet wird, um eine unabhängige Drehung jeder einzelnen der beiden parallelen Endkanten (119', 119") zu bewirken.

7. Vorrichtung nach einem der Ansprüche 1 bis 4, dadurch gekennzeichnet, daß die Mittel, um während des Fluges die Lage der Endkante wahlweise zu verändern, die den Fokus (19; 119; 119', 119") der Düse darstellt, Schalter (271) enthalten, die auf beiden Seiten der ersten und zweiten Seitenwand (131, 132) der Düse angeordnet sind und auf eine Schiene (261) wirken, welche in der Nähe der Achse (146) angeordnet ist, an der die Endkante (19; 119; 119', 119") drehbar angebracht ist.

8. Vorrichtung nach einem der Ansprüche 5 und 6, dadurch gekennzeichnet, daß die Mittel, um während des Fluges die Lage der Endkante wahlweise zu verändern, die den Fokus (19; 119; 119', 119") der Düse darstellt, Schalter (171, 172, 173, 174) enthalten, die an die Fahrzeugstruktur angeschlossen sind, indem sie außerhalb der Düse seitlich der ersten profilierten Hauptwand angeordnet sind und daß die Schalter (171, 172, 173, 174) auf eine Querstange, die parallel zur Endkante (19; 119; 119', 119") ist, wirken und an die Seitenwände (151, 152; 153, 154; 151, 154) des ausklappbaren, rinnenförmigen Aufbaus gebunden sind.

9. Vorrichtung nach einem der Ansprüche 1 bis 8, gekennzeichnet durch mindestens zwei zweidimensionale Expansions-Deflexions-Düsen (101, 102; 103, 104), die mit Mitteln (171 bis 174; 271) ausgerüstet sind, um während des Fluges die Lage der Endkante, die den Fokus (19; 119) der Düse darstellt, wahlweise zu verändern, wobei die Düsen bezüglich einer Ebene, die die Fahrzeugachse beinhaltet, symmetrisch angeordnet sind.

10. Vorrichtung nach Anspruch 9, dadurch gekennzeichnet, daß sie mindestens zwei zweidimensionale Expansions-Deflexions-Düsen (101, 102) mit einstellbarer Lage des Brennpunktes aufweist, die bezüglich einer axialen horizontalen Ebene symmetrisch angeordnet sind, um eine Kontrolle des Giermoments des Fahrzeugs zu ermöglichen.

11. Vorrichtung nach Anspruch 9 oder 10, dadurch gekennzeichnet, daß sie mindestens zwei zweidimensionalen Expansions-Deflexions-Düsen (103, 104) mit einstellbarer Lage des Brennpunktes aufweist, die bezüglich einer vertikalen axialen Ebene symmetrisch angeordnet sind, um eine Kontrolle des Kippmoments des Fahrzeugs zu ermöglichen.

12. Vorrichtung nach einem der Ansprüche 1 bis 8, gekennzeichnet durch mindestens zwei Paare der zweidimensionalen Expansions-Deflexions-Düsen (101, 102; 103, 104), die mit Mitteln (171 bis 174; 271) ausgerüstet sind, zum wahlweisen Verändern während des Fluges der Lage der Endkante, die den Fokus (19; 119) der Düse darstellt, und die bezüglich einer vertikalen Ebene, die die Fahrzeugachse beinhaltet, symmetrisch angeordnet sind und wobei die Düsen (103, 104) des einen Düsenpaares, bezogen auf die Düsen (101, 102) des anderen Düsenpaares, derart um 90° versetzt sind, daß eine Kontrolle des Fahrzeugs im Rollen, Gieren und Kippen ermöglicht wird.

## Claims

1. Device for yaw and pitch control of an aerospace vehicle equipped with at least one two-dimensional expansion/deflection nozzle (10; 10a, 10b; 101, 102, 103, 104) comprising a first shaped main wall which has a first part (11; 111) more or less parallel to the longitudinal axis of the vehicle and delimits a combustion chamber (20), a curved second part (12; 112) delimiting the throat (21) of the nozzle, a third part (13; 113) which is essentially straight and inclined at a predetermined angle θ with respect to the axis of the vehicle and a curved fourth part (14; 114) which is curved in the opposite direction to the second part (12; 112), a second shaped main wall which has a first part (16; 116) more or less parallel to the axis of the vehicle and delimits said combustion chamber (20), a curved second part (17; 117) delimiting the said throat (21) of the nozzle, a third part (18; 141, 142; 241, 242) which is essentially straight, and an end edge (19; 119; 119', 119") defining a centre of pressure of the nozzle, and first and second more or less flat side walls (131, 132) connecting the first and second shaped main walls, the device comprising means (171 to 174; 271) for selectively altering, in flight, the position of the end edge forming the centre of pressure (19; 119; 119', 119") of the nozzle and creating a non-axial thrust component with a modulus and direction which are determined in order to bring about a pitching or yawing movement.

2. Device according to Claim 1, characterized in that the end edge (19; 119; 119', 119") defining the centre of pressure of the nozzle is mounted so that it can pivot about a pin (146) located close to the curved second part (17; 117) of the second shaped main wall.

3. Device according to Claim 1 or 2, characterized in that the end edge (119) is split into two parallel edges (119', 119") each of which can pivot independently and in that a dividing partition (150) is placed along the axis of the nozzle at right angles to the two parallel edges (119', 119") which are themselves situated one on either side of the dividing partition (150) which splits the nozzle into two flow regions.

4. Device according to Claim 2 or 3, characterized in that the end edge (19; 119; 119', 119") defining the centre of pressure of the nozzle and the corresponding pivot pin (146) are connected by a plate (241, 242) forming a flap.

5. Device according to Claim 2 or 3, characterized in that the end edge (19; 119; 119', 119") defining the centre of pressure of the nozzle and the corresponding pivot pin (146) belong to a swinging structure in the shape of a U-shaped trough (141, 143, 151, 152; 142, 144, 153, 154; 141, 143, 151, 154).

6. Device according to Claims 3 and 5, characterized in that the dividing partition (150) consists of two adjacent side walls (152, 153) of two trough-shaped swinging structures side by side so as to bring about an independent pivoting of each of the two parallel end edges (119', 119").

7. Device according to any one of Claims 1 to 4, characterized in that the means for selectively altering, in flight, the position of the end edge that forms the centre of pressure (19; 119; 119', 119") of the nozzle comprise actuators (271) arranged on either side of the first and second side walls (131, 132) of the nozzle and acting on a rack (261) situated near to the pin (146) about which the end edge (19; 119; 119', 119") can pivot.

8. Device according to either one of Claims 5 and 6, characterized in that the means for selectively altering, in flight, the position of the end edge that forms the centre of pressure (19; 119; 119', 119") of the nozzle comprise actuators (171, 172, 173, 174) attached to the structure of the vehicle while being arranged outside the nozzle on the same side as the first shaped main wall, and in that the actuators (171, 172, 173, 174) act on a transverse bar parallel to the end edge (19; 119; 119', 119") and secured to the side walls (151, 152; 153, 154; 151, 154) of the swinging trough-shaped structure.

9. Device according to any one of Claims 1 to 8, characterized in that it comprises at least two two-dimensional expansion/deflection nozzles (101, 102; 103, 104) which are equipped with means (171 to 174; 271) for selectively altering, in flight, the position of the end edge that forms the centre of pressure (19; 119) of the nozzle and which are arranged symmetrically with respect to a plane containing the axis of the engine.

10. Device according to Claim 9, characterized in that it comprises at least two two-dimensional expansion/deflection nozzles (101, 102) with position-adjustable centre of pressure which are arranged symmetrically with respect to a horizontal axial plane so as to allow control of the yawing moment of the vehicle.

11. Device according to Claim 9 or 10, characterized in that it comprises at least two two-dimensional expansion/deflection nozzles (103, 104) with position-adjustable centre of pressure which are arranged symmetrically with respect to a vertical axial plane so as to allow control of the pitching moment of the vehicle.

12. Device according to any one of Claims 1 to 8, characterized in that it comprises at least two pairs of two-dimensional expansion/deflection nozzles (101, 102; 103, 104) which are equipped with means (171 to 174; 271) for selectively altering, in flight, the position of the end edge that forms the centre of pressure (19; 119) of the nozzle and which are arranged symmetrically with respect to a vertical plane containing the axis of the engine, the nozzles (103, 104) of one of the pairs of nozzles being offset by an angle of 90° compared to the nozzles (101, 102) of the other pair of nozzles, so as to allow control of the vehicle in roll, yaw and pitch.
